# EUROPEAN PATENT SPECIFICATION

(11) **EP 1 394 419 B1**
(45) Date of publication and mention of the grant of the patent: **23.01.2008**
(21) Application number: 03012218.8
(22) Date of filing: 06.06.2003
(51) Int. Cl.: F15B 15/08, F16K 37/00

(54) **Element for indicating valve opening/closure, particularly for hydraulic valve control actuators**
Element zum Anzeigen des Schaltzustandes eines Ventils, insbesondere für hydraulische Ventilstellglieder
Elément pour l'indication de l'ouverture ou de la fermeture d'une soupape, surtout pour vérins à commande de soupapes hydrauliques

(30) Priority: 02.09.2002 IT MI20020410 U
(43) Date of publication of application: 03.03.2004
(73) Proprietor: Air Torque S.p.A., 24060 Costa di Mezzate (Bergamo) (IT)
(72) Inventor: Marinoni, Antonio, 24064 Grumello del Monte (Bergamo) (IT); Paris, Ignazio, 24064 Grumello del Monte (Bergamo) (IT); Rota, Santo, 24061 Albano S. Alessandro (Bergamo) (IT); Trapletti, Libero, 24060 Grone (Bergamo) (IT)
(74) Representative: Modiano, Micaela Nadia

(56) References cited:
- EP-A- 1 033 496
- SE-B- 425 574
- US-A- 6 112 619

## Description

The present invention relates to a hydraulic valve control actuator comprising an element for indicating valve opening/closure.

As is known, hydraulic actuators applied to industrial valves have an opening/closure indication element that allows to visualize the position of the valve.

Currently there are two separate standards: namely, the ISO standard and the European standard; the ISO standard requires the stem of the valve to engage a seat, formed at the lower end of the shaft of the actuator, which must have a square shape and must be arranged so that its sides are respectively parallel and perpendicular to the direction of the translational motion of the hydraulic actuator.

The European standard instead allows said seat also to be angled at 45° with respect to the direction of motion of the pistons that engage the shaft.

This situation therefore entails the need to be able to provide two separate solutions, which during manufacture imply the need to provide two separate production lines.

EPA - 99118081.1 by the same Applicant, discloses a solution that allows to solve both positions by modifying the end of the shaft of the actuator, which is given an octagonal shape so as to allow to position the visual indicator correctly in both of the situations proposed above.

This embodiment, which has proved to be valid in many respects, is susceptible of improvements, especially as regards the need to provide a specific machining of the ends of the shaft.

The aim of the invention is to overcome the problem noted above, by providing an element for indicating valve opening/closure, particularly for hydraulic valve control actuators, that allows to adapt to the two different positions without thereby providing a particular machining of the end of the shaft.

Within this aim, an object of the invention is to provide an indicator element that is particularly versatile and practical and further can adapt without particular problems to all contingent installation requirements.

Another object of the present invention is to provide an indicator element that thanks to its particular constructive characteristics is capable of giving the greatest assurances of reliability and safety in use.

Another object of the present invention is to provide an indicator element that can be obtained easily starting from commonly commercially available elements and materials and is further competitive from a merely economical standpoint.

In accordance with the invention, there is provided a hydraulic valve control actuator comprising an element for indicating valve opening/closure, as defined in the appended claims.

Further characteristics and advantages of the invention will become better apparent from the detailed description of an element for indicating valve opening/closure particularly for hydraulic valve control actuators, illustrated by way of non-limitative example in the accompanying drawings, wherein:
Figure 1 is a partially sectional view of a hydraulic actuator with the indicator element according to the invention applied thereto;
Figures 2 and 3 are views of the indicator element applied to hydraulic actuators with a different position of the shaft;
Figure 4 is a schematic exploded top perspective view of the indicator element and of the shaft of the hydraulic actuator;
Figure 5 is a bottom exploded perspective view of the shaft with the seat arranged at 45° to the direction of motion of the piston;
Figure 6 is a bottom exploded perspective view of the indicator element with the shaft provided with a seat whose sides are parallel and perpendicular to the direction of motion of the pistons.

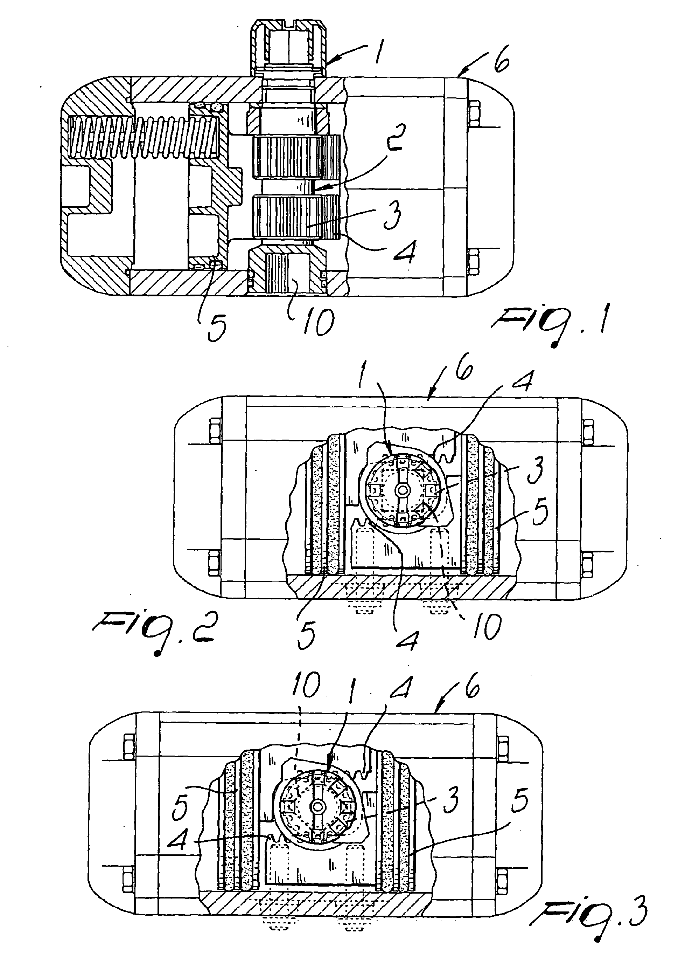

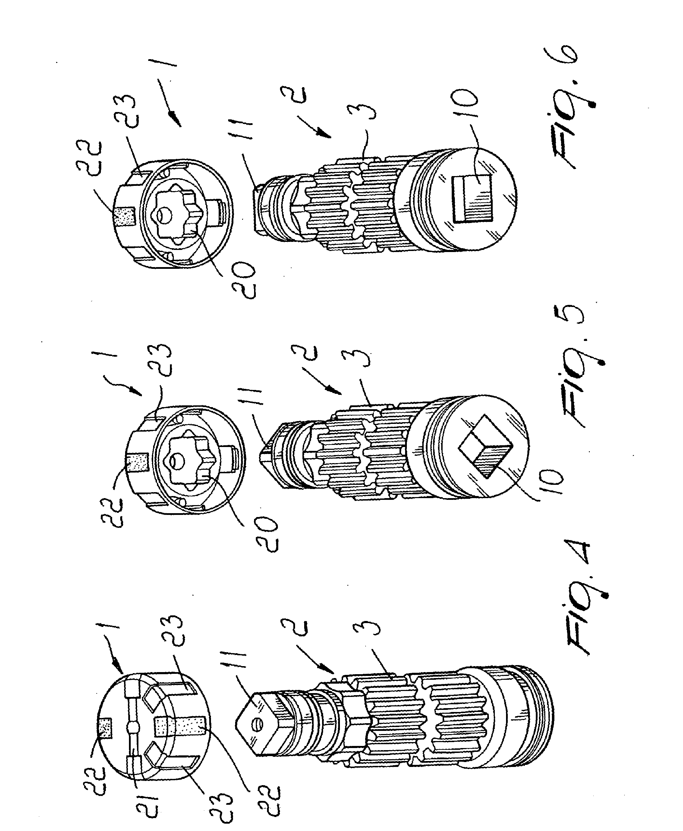

With reference to the figures, the element for indicating valve opening/closure particularly for hydraulic valve control actuators, according to the invention, comprises a cap, generally designated by the reference numeral 1, which can be mated to the end of a shaft 2, which is provided with a pinion 3 for engagement with a rack 4 that is associated with a piston of a pair of pistons 5 that move opposite one another in a hydraulic actuator, generally designated by the reference numeral 6.

The shaft 2 forms, in an upward region, a square coupling recess 11 and, in a downward region, a seat 10 for engaging the stem of a valve, not shown in detail, which has a square contour and can be arranged so that its parallel sides are perpendicular to the direction of motion of the pistons 5 or angled at 45° with respect to the direction of motion of said pistons.

The indicator element 1 has, on its inner face, a seat 20 that is formed by two square shapes rotated by 45° with respect to each other and in which a square coupling recess 11 can engage. The seat is thus defined by a polygon having sixteen sides.

The cap 1 has, on its outer surface, a visual indicator for indicating the condition of the valve; such indicator is constituted by a bar-shaped hollow 21, which is elongated diametrically and can be arranged in two perpendicular positions in order to indicate the opening or closure of the valve.

Furthermore, externally there are notches 22, which are arranged diametrically but are not connected, and there are intermediate notches 23 arranged at 45° with respect to the diametrical notches.

With the arrangement described above, therefore, the cap 1, which has a seat formed by two square shapes, can be positioned easily in positions that are 45° apart, and therefore allows to position correctly the visual indicator, constituted by the hollow 21, regardless of the rotation of the seat 10 for mating with the stem of the valve.

From the above description it is therefore evident that the invention achieves the intended aim and objects, and in particular the fact is stressed that the indicator element allows, by using a hydraulic actuator of the conventional type, to always provide a correct visual indication of the open/closed condition of the valve regardless of the relative arrangement of the walls of the seat with respect to the direction of translational motion of the pistons of the hydraulic actuator.

In practice, the materials used, so long as they are compatible with the specific use, as well as the contingent shapes and dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An hydraulic valve control actuator comprising an element for indicating valve opening/closure, said element comprising a cap (1) that can be mated with the end (11) of an actuation shaft (2) of a valve, said end (11) of said shaft (2) being square, and said actuation shaft (2) being provided with a pinion (3) for engagement with a rack (4) that is associated with a piston of a pair of pistons (5) that move opposite one another in said hydraulic actuator (6), said cap (1) having a visual indicator of the condition of the controlled valve, **characterized in that** said cap forms, for engagement with said square end (11) of said actuation shaft, a seat (20) formed by two square shapes rotated by 45° with respect to each other.

2. The hydraulic valve control actuator according to claim 1, **characterized in that** said visual valve condition indicator is constituted by a hollow (21) that lies diametrically on the outer face of said cap (1).

3. The hydraulic valve control actuator according to the preceding claims, **characterized in that** it comprises, on the outer face of said cap (1), diametrical notches (22) arranged substantially at right angles to said hollow (21).

4. The hydraulic valve control actuator according to one or more of the preceding claims, **characterized in that** it comprises, on the outer surface of said cap (1), intermediate notches (23) arranged at 45° with respect to said diametrical notches.

## Patentansprüche

1. Ein hydraulisches Ventilstellglied, dass ein Element zur Anzeige des Schaltzustandes eines Ventils aufweist, wobei das Element eine Kappe (1), die mit einem Ende (11) einer Betätigungswelle (2) eines Ventils zusammengefügt werden kann, aufweist, wobei das Ende (11) der Welle (2) quadratisch ist und die Betätigungswelle (2) mit einem Antriebsritzel (3), an dem eine Zahnstange (4) angreift, aufweist, welches einem Kolben eines Paars von Kolben (5) zugeordnet ist, welche einander gegenläufig sich in dem hydraulischen Stellglied (6) bewegen, wobei die Kappe (1) eine visuelle Anzeige des Schaltzustandes des Ventils besitzt, **dadurch gekennzeichnet, dass** die Kappe, um mit dem quadratischen Ende (11) der Betätigungswelle in Eingriff zu sein, einen Sitz (20) aufweist, der durch zwei quadratische Formen, die um 45° ineinander verdreht sind, gebildet ist.

2. Das hydraulische Ventilstellglied nach Anspruch 1, **dadurch gekennzeichnet, dass** der visuelle Ventilschaltzustandsanzeiger durch eine Ausnehmung (21), welche diametral auf der äußeren Fläche der Kappe (1) angeordnet ist, gebildet ist.

3. Das hydraulische Ventilstellglied nach einem der vorgenanntem Ansprüche, **dadurch gekennzeichnet, dass** es auf der äußeren Fläche der Kappe (1) diametrale Nuten (22) enthält, welche im wesentlichen rechtwinklig zu der Ausnehmung (21) angeordnet sind.

4. Das hydraulische Ventilstellglied nach einem oder mehreren der vorgenannten Ansprüche, **dadurch gekennzeichnet, dass** es an der äußeren Oberfläche der Kappe (1) Zwischennuten (23), welche um 45° zu den diametralen Nuten versetzt angeordnet sind, aufweist.

## Revendications

1. Actionneur de commande de valve ou de soupape hydraulique comprenant un élément pour indiquer l'ouverture/la fermeture d'une valve, ledit élément comprenant un capuchon (1) qui peut se monter sur l'extrémité (11) d'un arbre de commande (2) d'une valve, ladite extrémité (11) dudit arbre (2) étant carrée, et ledit arbre de commande (2) étant muni d'un pignon (3) pour l'engagement avec une crémaillère (4) qui est associée à un piston d'une paire de pistons (5) qui se déplacent de manière opposée l'un par rapport à l'autre dans ledit actionneur hydraulique (6), ledit capuchon (1) ayant un indicateur visuel de l'état de la valve commandée, **caractérisé en ce que** ledit capuchon forme, pour l'engagement avec ladite extrémité carrée (11) dudit arbre de commande, un logement (20) constitué par deux formes carrées tournées de 45 degrés l'une par rapport à l'autre.

2. Actionneur de commande de valve hydraulique selon la revendication 1, **caractérisé en ce que** ledit indicateur visuel de l'état de la valve est constitué par un évidement (21) qui s'étend de façon diamétrale sur la face externe dudit capuchon (1).

3. Actionneur de commande de valve hydraulique selon les revendications précédentes, **caractérisé en ce qu'**il comprend, sur la face externe dudit capuchon (1), des encoches diamétrales (22) agencées sensiblement à angle droit par rapport audit évidement (21).

4. Actionneur de commande de valve hydraulique selon une ou plusieurs des revendications précédentes, **caractérisé en ce qu'**il comprend, sur la face externe dudit capuchon (1), des encoches intermédiaires (23) agencées à 45 degrés par rapport auxdites encoches diamétrales.
